# EUROPEAN PATENT SPECIFICATION

(11) **EP 1 113 956 B1**
(45) Date of publication and mention of the grant of the patent: **15.09.2004**
(21) Application number: 99951328.6
(22) Date of filing: 17.09.1999
(51) Int. Cl.: B62D 25/14, B60K 37/00

(54) **ARRANGEMENT FOR A VEHICLE DASHBOARD**
FAHRZEUGARMATURENBRETTANORDNUNG
DISPOSITIF POUR TABLEAU DE BORD DE VEHICULE

(30) Priority: 18.09.1998 SE 9803203
(43) Date of publication of application: 11.07.2001
(73) Proprietor: Volvo Personvagnar AB, 405 08 Göteborg (SE)
(72) Inventor: FOSSE, Tore, S-416 52 Göteborg (SE)
(74) Representative: Andersson, Per Rune
(86) International application number: PCT/SE1999/001620
(87) International publication number: WO 2000/017035

(56) References cited:
- US-A- 3 924 707
- US-A- 4 397 480
- US-A- 4 795 189
- US-A- 4 823 905
- US-A- 5 054 810
- US-A- 5 174 409
- DATABASE WPI Derwent Publications Ltd., London, GB; AN 1996-318353, XP002944375 NISSAN DIESEL KOGYO KK: 'Steering wheel collision prevention structure for vehicle - has impact reveiving member which pushed backward and steering wheel and instrument panel are pulled downwards by wire rope' & JP 8 142 876 A (NSMO) 04 June 1996

## Description

### TECHNICAL FIELD

The present invention relates to an arrangement of a dashboard in a vehicle, according to the preamble of appended claim 1 and which is disclosed in JP 8142876 A. The invention is intended for the type of vehicle which is provided with an energy-absorbing steering mechanism.

### BACKGROUND OF THE INVENTION

Today's motor vehicles, e.g. passenger cars, are normally provided with a dashboard which is arranged in front of the driver's seat and extends across the longitudinal direction of the vehicle. Normally, such a dashboard is provided with, on the one hand, a number of various instruments, e.g. in the form of a so-called combination instrument which may comprise speed indicator and revolution indicator, and, on the other hand, air distribution channels, air outlets, glove compartment and operating devices for, for example, the vehicle's headlights and ventilation system.

Furthermore, there are often demands for designing a vehicle's steering mechanism in such manner that it obtains energy-absorbing characteristics. The main reason for this is that it is required that a driver who is not using the seat belt nevertheless should have a certain degree of protection if he/she is thrown against the steering wheel in the event of a collision. Moreover, this requirement regarding the energy-absorption of the steering mechanism also applies in those cases when the driver is wearing the seat belt. In this case, it must be taken into consideration that the driver in some driving situations actually may hit the steering wheel in connection with a collision, even if he/she is fastened by means of the seat belt. This may occur if, for example, the driver has the seat situated so that it protrudes very far or if the seat belt has an exceptionally large slack.

Thus, there is a demand for designing the steering mechanism so that it absorbs energy in connection with a possible collision. According to known technique, this can be accomplished by, for example, providing the steering wheel with deformable and non-rigid spokes. It can also be accomplished by arranging the vehicle's main shaft in a specially designed energy-absorbing steering column, which in turn is suspended in the vehicle's body. In the event of a possible collision, when the steering wheel is influenced by a large force as a consequence of the passenger being thrown forwards, this force will be transmitted to the steering column via the main shaft. Due to the fact that the steering column is energy-absorbing, this results in that the steering wheel and the main shaft are allowed to be transferred forwards a certain distance while energy is absorbed. This, in turn, decreases the strains upon the driver during the course of the collision .

One problem which prevails in connection with a system of the above-mentioned kind is that there is a risk of, for example, the steering wheel hitting against the dashboard in connection with a possible collision, i.e. when the steering wheel and the main shaft are displaced forwards while energy is absorbed. This is especially true since a large number of functions and components must be co-ordinated on a comparatively small available area in connection with the driver's seat in the vehicle. For ergonomical and design reasons, the steering mechanisms in today's vehicles are particularly formed in a very space-saving manner, which contributes to the above-mentioned problem.

Moreover, there is a demand that in connection with a collision, the steering wheel should be transferable a comparatively long distance while energy is absorbed. The longer distance the steering wheel can be displaced, the more effective energy-absorption is allowed and the more effective deceleration of the driver's movement takes place during the course of the collision. In this manner, the load which acts upon the driver can be reduced to a minimum.

Taken together, the above-mentioned factors contributes to the fact that a problem arises if, for example, the steering wheel hits the dashboard so that it decelerates during its movement forwards, since this results in that the expected energy-absorption when the driver hits the steering wheel in this case is impaired or even fails to appear as a result of the movement of the steering wheel decelerating. Of course, this results in an impaired energy-absorption in such previously known systems.

The patent document JP 8-142876 A discloses a vehicle comprising a steering arrangement with a steering wheel which can be moved away from the driver of the vehicle in the event of a collision.

The patent document US 3924707 discloses a dashboard which is connected with a vehicle body via energy absorbing elements.

### SUMMARY OF THE INVENTION

The object of the present invention is to provide an improved arrangement for a dashboard in a vehicle, by means of which the above-mentioned problem is solved. In particular, it is an object of the invention to provide an effective energy-absorption in a steering mechanism during a possible collision. This is achieved by means of an arrangement, the features of which will be apparent from appended claim 1.

The arrangement according to the invention is intended to be provided in connection with a dashboard in a vehicle comprising a steering mechanism with a steering wheel and a main shaft which are adapted to be displaceable towards the dashboard, essentially along a direction which coincides with the longitudinal direction of the vehicle, in the event of a collision-like condition being present in the vehicle. The invention is characterized in that the dashboard comprises at least one section which is situated in front of the steering wheel and which is movably arranged in relation to the rest of the vehicle and which is connected with a transfer member for moving said section in a direction away from the actual position of the steering wheel during said collision-like condition, thereby increasing the free distance that said steering wheel can be displaced without hitting said dashboard.

According to a preferred embodiment, the transfer member comprises a pyrotechnical pretensioner which in turn is connected with an acceleration sensor which is provided in the vehicle. During activation of the pretensioner, said movable section is transferred away from the steering wheel, in a direction towards the front of the vehicle. This implies that there is no risk of the dashboard being hit by, for example, the steering wheel in the event of a collision. In this manner, a comparatively long distance is obtained during which the steering wheel is transferred while energy is absorbed in a controlled manner.

Advantageous embodiments of the invention will be apparent from the appended dependent claims.

### BRIEF DESCRIPTION OF THE DRAWINGS

The invention will be further described in the following with reference to a preferred embodiment and to the appended drawings, in which
Fig. 1 shows a schematical side view of an arrangement according to the present invention, and
Fig. 2 shows a perspective view which in an oblique angle from above shows a dashboard which is arranged in accordance with the invention.

### PREFERRED EMBODIMENT

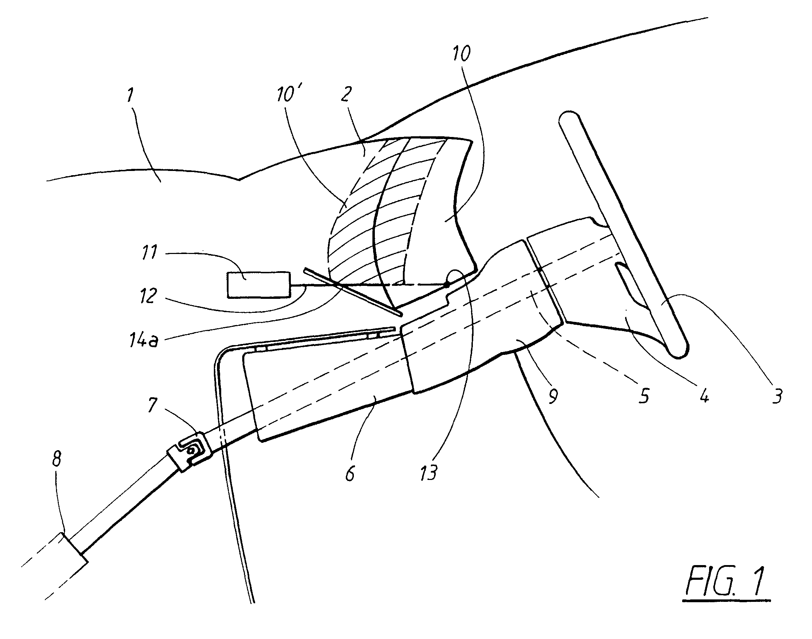

In Fig. 1, a schematic side view, partly in cross-section, of an arrangement according to the present invention is shown, which in particular can be utilized in a motor vehicle 1 in the form of a passenger car. According to a preferred embodiment, the vehicle 1 is provided with a dashboard 2 which in a conventional manner is arranged in the front part of the vehicle's 1 passenger compartment, its extension being essentially crosswise to the longitudinal direction of the vehicle 1. In a known manner, the dashboard 2 is designed for accommodating (not shown) instruments, indicators, air outlets, operating devices and the like.

The vehicle 1 is provided with a steering mechanism which in turn comprises a steering wheel 3 and a steering wheel hub 4 associated therewith. Preferably, the steering wheel hub 4 comprises a (not shown) airbag and a gas generator associated therewith. Furthermore, the steering wheel 3 is fixed to a main shaft 5 which extends obliquely forwards and downwards in the vehicle. The main shaft 5 is in turn arranged in such manner that it runs through and is mounted in a steering column 6, which in turn is fixedly connected with the dashboard 2.

According to the embodiment, the steering column 6 is of the type which is adapted in such manner that it can absorb energy during influence of a force which occurs if the driver is pressed against the steering wheel 3 during, for example, a collision with the vehicle 1. To this end, the steering column 6 is arranged so that a movement of the main shaft 5 a certain distance in relation to the steering column 6 is allowed while energy is absorbed. The energy-absorption of the steering column 6 can be obtained by, for example, arranging the main shaft 5 so that it is connected with some form of deformable element which in turn is mounted in the steering column 6. When the steering wheel 3 and the main shaft 5 are influenced by a large force, the deformable element will yield, wherein the main shaft 5 is displaced a certain distance while energy is absorbed. This energy-absorption results in that the strains upon the driver can be reduced during the course of collision.

Preferably, the steering column 6 is essentially box-shaped, and is arranged on the underside of the dashboard 2. Moreover, the steering column 6 can comprise (not shown) means for adjustment of the main shaft 5 vertically and in depth.

Furthermore, the lower end section of the main shaft 5 is connected with the steering system of the vehicle 1 via a knot 7. In a known manner, the steering system is intended for steering the wheels of the vehicle 1 and is schematically indicated in Fig. 1 in the form of a steering gear 8.

The main shaft 5 supports a housing 9, which is arranged in close connection with the steering wheel hub 4, more precisely so that it surrounds the main shaft 5. In a known manner, the housing 9 is intended for accommodating, for example, (not shown) operating devices for direction indicator, windscreen wipers, cruise control system and the like. The housing 9 also constitutes a carrier for the vehide's steering lock.

According to what has been mentioned initially, a problem in connection with known steering systems which provide an energy-absorption during collision is that there is a risk of the steering wheel, the housing or any other part of the steering mechanism hitting against the dashboard in connection with these parts being transferred forwards in the vehicle in connection with a collision. In order to solve this problem, a basic principle of the present invention is that at least a certain section 10 of the dashboard 2 is movably arranged and can be influenced to be transferred in a direction away from the steering wheel 3 during a collision-like condition. According to the invention, the section 10 is constituted by a part of the dashboard 2 which is situated in front of the steering wheel 3, the main shaft 5 and the housing 9, i.e. a part which has such an extension in the transversal direction of the dashboard 2 that there otherwise is a risk of the part being hit by the hypothetical movement forwards of the steering wheel 2, the main shaft 5 and/or the housing 9 during a collision. More precisely, the section 10 according to the embodiment is constituted by a frame or a casing which surrounds a so-called combination instrument (i.e. a not shown instrument unit which comprises speed indicator, revolution indicator and the like).

According to the preferred embodiment, the movable section 10 is arranged in such manner that it can be influenced to be displaced in a direction towards the front of the vehicle 1, more precisely towards a front position which in Fig. 1 is indicated by means of shading and with the reference numeral 10'. This transfer occurs by means of a transfer member 11, which preferably is constituted by a pretensioning device which is built-in and fixedly arranged in connection with the dashboard 2. Preferably, the pretensioner 11 is of a pyrotechnical type, which is a per se known construction which also can be utilized in order to tension a seat belt in a vehicle in connection with a collision. The pretensioner 11 according to the invention comprises a (not shown) piston which is connected with a connection member 12 in the form of a wire or a band. One of the ends of the wire 12 is mounted in said piston, whereas the other end is fixedly arranged in a mounting location 13 in the movable section 10. For compact-technical reasons, the wire 12 is preferably linked around a rotary pin, pulley or the like (not apparent from Fig. 1) which is fixedly arranged inside the dashboard 2.

Inside the pretensioner 11, an explosive charge (not shown) is arranged which can be ignited by means of a trigger device, wherein the above-mentioned piston is influenced to be transferred. This results in that the wire 12 is retracted into the pretensioner 11. Via an electric wire, the trigger device is connected with an acceleration sensor (not shown) which is situated in the vehicle's 1 passenger compartment. In a known manner, the acceleration sensor is adapted for detecting a collision or a collision-like condition in the vehicle, i.e. a condition where the vehicle is decelerated forcefully. In case of an airbag being provided in the steering wheel hub 4, said sensor also can be utilized for activating such an airbag.

In case of a collision-like condition being detected, the above-mentioned explosive charge will be detonated. This results in that the wire 12 is retracted into the pretensioner 11, which in turn results in that the section 10 is transferred to its front position 10'. In order to facilitate this transfer, the section 10 is preferably arranged so that it can be guided along a predetermined path by means of displacement along at least one, but preferably two guide grooves 14a, 14b (where only one groove 14a is apparent from Fig. 1), which are arranged in the lower part of the dashboard 2.

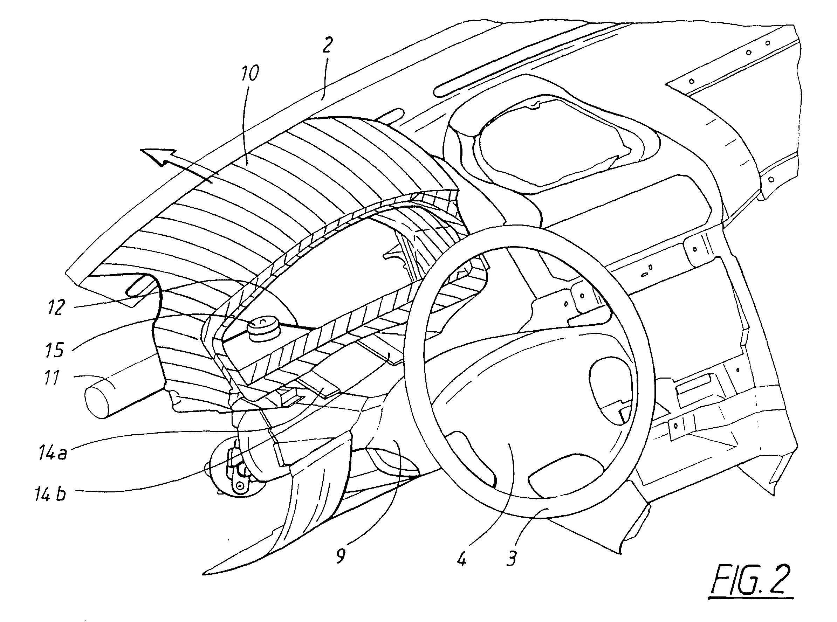

Fig. 2 shows a slightly simplified perspective view of the dashboard 2 and the above-mentioned section 10, which is indicated by means of shading. Fig. 2 shows the dashboard 2 in a partly disassembled condition. The section 10 is movably arranged in relation to the rest of the dashboard 2 and can be guided along a predetermined path by means of the fact that its underside is displaced along the two grooves 14a, 14b. As is apparent from the drawing, the grooves 14a, 14b are provided in the lower part of the dashboard 2 and have an extension which essentially follows the longitudinal direction of the vehicle.

Moreover, the underside of the movable section 10 is preferably provided with pins, protrusions or corresponding components (not shown), which constitute guide elements which engage in respective groove 14a, 14b and assure that the section 10 is guided along the predetermined movement path which is defined by the grooves 14a, 14b.

Thus, the section 10 is displaceable in a direction towards the front of the vehicle, which is schematically indicated by means of an arrow in Fig. 2. According to the invention, this displacement occurs in the event of a collision or a collision-like condition in the vehicle 1 being detected, wherein there is a risk of the vehicle's driver being pressed forwards so that the steering wheel 3 is influenced by a large force. In this case, this results in that the steering wheel 3 together with the main shaft 5 and the housing 9 are pressed forwards, in the direction towards the dashboard 2. When the collision-condition is detected by means of the above-mentioned acceleration sensor, the pretensioner 11 will be activated, which results in that the movable section 10 is transferred a short distance forwards to its front position 10' (cf. Fig. 1). From the drawing, it is apparent that the wire 12, which in this activated condition is retracted into the pretensioner 11, is linked around a rotary pulley 15.

By means of the invention, an increase is obtained of the free distance that the steering wheel 3 and the components associated therewith can be displaced without running the risk of hitting against the dashboard 2. According to what has been described above, this displacement occurs during energy-absorption in the steering column 6, which provides an efficient deceleration which decreases the strains upon the driver during the course of the collision.

Preferably, the movable section 10 is connected with the rest of the dashboard 2 via (not shown) weakenings or rupture markings, which are torn open due as a result of the pretensioner 11 being activated for transfer of the section 10. Alternatively, the movable section 10 can be designed so that it goes clear in relation to the rest of the dashboard 2. In this case, any possible joints between the section 10 and the dashboard 2 can be hidden by means of a suitably designed external cover (not shown) on the dashboard 2.

The invention is not limited to the embodiment which is described above, but may be varied within the scope of the appended claims. For example, the invention can be utilized for various types of vehicles, e.g. passenger cars, buses and lorries.

Furthermore, the invention can in principle also be utilized for the types of vehicles which are not provided with any energy-absorbing suspension of the main shaft.

In those cases where the main shaft is suspended in such manner that it absorbs energy in connection with a collision, this energy-absorption can be achieved in various manners, e.g. by means of the above-mentioned steering column 6. Alternatively, the energy-absorption can be achieved by making the main shaft per se non-rigid, e.g. flexible, in the event of an applied force.

As an alternative to the above-mentioned embodiment, the movable section can be transferred by being displaced sideways or upwards a certain distance. In this case, by means of a suitable design and transfer of the movable section, a corresponding increase is obtained of the distance that the steering wheel and the components associated therewith are allowed to be displaced without running the risk of hitting against the dashboard. Furthermore, the transfer member 11 can be directly connected with the movable section 10 without the use of a wire 12. In this manner, the transfer member can be pushing instead of pulling and can, for example, push the section 10 upwards.

## Claims

1. Arrangement for a dashboard (2) in a vehicle (1) comprising a steering mechanism with a steering wheel (3) and a main shaft (5) which are adapted to be displaceable towards the dashboard (2), essentially along a direction which coincides with the longitudinal direction of the vehicle (1), in the event of a collision-like condition being present in the vehicle (1), **characterized in that** the dashboard (2) comprises at least one section (10) which is situated in front of the steering wheel (3) and which is movably arranged in relation to the rest of the vehicle (1) and which is connected with a transfer member (11) for moving said section (10) in a direction away from the actual position of the steering wheel (3) during said collision-like condition, thereby increasing the free distance that said steering wheel (3) can be displaced without hitting said dashboard (2).

2. Arrangement according to claim 1, **characterized in that** the section (10) is movably arranged essentially in the longitudinal direction of the vehicle (1).

3. Arrangement according to claim 1 or 2, **characterized in that** said main shaft (5) is suspended in an energy-absorbing steering column (6) which is fixedly connected with said dashboard (2), wherein energy is absorbed during said displacement of the steering wheel (3) and the main shaft (5).

4. Arrangement according to any one of the preceding claims, **characterized in that** said section (10) is constituted by a section of the dashboard (2) with a predetermined extension in the transversal direction of the vehicle (1) which corresponds to the part of the dashboard (2) which is hit during a hypothetical movement of the steering wheel (3) and the main shaft (5) during said displacement.

5. Arrangement according to any one of the preceding claims, **characterized in that** said transfer member (11) is connected with an acceleration sensor in the vehicle (1) for detection of said collision-like condition.

6. Arrangement according to claim 5, **characterized in that** said transfer member (11) is constituted by an pretensioner of a pyrotechnical type

7. Arrangement according to any one of the preceding claims, **characterized in that** the dashboard (2) is provided with at least one groove (14a, 14b) for guiding said section (10) along a predetermined path, wherein said element (10) comprises guide elements for cooperation with said grooves (14a, 14b).

## Patentansprüche

1. Anordnung für ein Armaturenbrett (2) in einem Fahrzeug (1) mit einem Lenkmechanismus mit einem Lenkrad (3) und einer Hauptwelle (5), die in Richtung auf das Armaturenbrett im wesentlichen längs einer Richtung, die mit der Längsrichtung des Fahrzeugs (1) zusammenfällt, im Fall des Vorliegens eines kollisionsähnlichen Zustands in dem Fahrzeug (1) verlagerbar sind,
**dadurch gekennzeichnet, dass** das Armaturenbrett (2) wenigstens einen Abschnitt (10) aufweist, der vor dem Lenkrad (3) liegt und der bezüglich des Rests des Fahrzeugs (1) beweglich angeordnet ist und der mit einem Übertragungselement (11) zur Beeinflussung durch den Abschnitt (10) in einer Richtung weg von der tatsächlichen Stellung des Lenkrads (3) während des kollisionsähnlichen Zustands verbunden ist, wodurch der freie Abstand vergrößert ist, in dem das Lenkrad (3) ohne Auftreffen auf das Armaturenbrett (2) verlagert werden kann.

2. Anordnung nach Anspruch 1, **dadurch gekennzeichnet, dass** der Abschnitt (10) im wesentlichen in Längsrichtung des Fahrzeugs (1) bewegbar angeordnet ist.

3. Anordnung nach Anspruch 1 oder 2, **dadurch gekennzeichnet, dass** die Hauptwelle (5) in einer energieabsorbierenden Lenksäule (6) aufgehängt ist, die fest mit dem Armaturenbrett (2) verbunden ist, wobei Energie während der Verlagerung des Lenkrads (3) und der Hauptwelle (5) absorbiert wird.

4. Anordnung nach einem der vorangehenden Ansprüche, **dadurch gekennzeichnet, dass** der Abschnitt (10) von einem Abschnitt des Armaturenbretts (2) mit einer vorbestimmten Erstreckung in Querrichtung des Fahrzeugs (1) gebildet ist, die dem Abschnitt des Armaturenbretts (2) entspricht, der während einer hypothetischen Bewegung des Lenkrads (3) und der Hauptwelle während der Verlagerung getroffen wird.

5. Anordnung nach einem der vorangehenden Ansprüche, **dadurch gekennzeichnet, dass** das Übertragungselement (11) zur Erfassung des kollisionsähnlichen Zustands mit einem Beschleunigungssensor in dem Fahrzeug (1) verbunden ist.

6. Anordnung nach Anspruch 5, **dadurch gekennzeichnet, dass** das Übertragungselement (11) durch einen pyrotechnischen Vorstraffer gebildet ist.

7. Anordnung nach einem der vorangehenden Ansprüche, **dadurch gekennzeichnet, dass** das Armaturenbrett (2) mit wenigstens einer Nut (14a, 14b) zur Führung des Abschnitts (10) längs eines vorbestimmten Weges versehen ist, wobei das Element (10) Führungselemente für das Zusammenwirken mit den Nuten (14a, 14b) aufweist.

## Revendications

1. Agencement pour un tableau de bord (2) dans un véhicule (1), comprenant un mécanisme de direction avec un volant de direction (3) et un arbre principal (5) qui sont adaptés pour pouvoir être déplacés vers le tableau de bord (2), essentiellement suivant une direction qui coïncide avec la direction longitudinale du véhicule (1), dans le cas d'une situation de type collision présente dans le véhicule (1), **caractérisé en ce que** le tableau de bord (2) comprend au moins une section (10) qui est située en face du volant de direction (3) et qui est agencée d'une façon mobile par rapport au reste du véhicule (1) et qui est connectée à un élément de transfert (11) pour une influence par ladite section (10) dans une direction qui l'éloigne de la position réelle du volant de direction (3) lors de ladite situation de type collision, augmentant de ce fait la distance libre sur laquelle ledit volant de direction (3) peut être déplacé sans heurter ledit tableau de bord (2).

2. Agencement selon la revendication 1, **caractérisé en ce que** la section (10) est agencée d'une façon mobile essentiellement dans la direction longitudinale du véhicule (1).

3. Agencement selon la revendication 1 ou 2, **caractérisé en ce que** ledit arbre principal (5) est suspendu dans une colonne de direction à absorption d'énergie (6) qui est fixement connectée audit tableau de bord (2), où l'énergie est absorbée au cours dudit déplacement du volant de direction (3) et de l'arbre principal (5).

4. Agencement selon l'une quelconque des revendications précédentes, **caractérisé en ce que** ladite section (10) est constituée par une section du tableau de bord (2) avec une extension prédéterminée dans la direction transversale du véhicule (1) qui correspond à la partie du tableau de bord (2) qui est heurtée à l'occasion d'un déplacement hypothétique du volant de direction (3) et de l'arbre principal (5) durant ledit déplacement.

5. Agencement selon l'une quelconque des revendications précédentes, **caractérisé en ce que** ledit élément de transfert (11) est connecté à un détecteur d'accélération dans le véhicule (1) servant à détecter toute situation de type collision.

6. Agencement selon la revendication 5, **caractérisé en ce que** ledit élément de transfert (11) est constitué d'un prétensionneur d'un type pyrotechnique.

7. Agencement selon l'une quelconque des revendications précédentes, **caractérisé en ce que** le tableau de bord (2) est pourvu d'au moins une rainure (14a, 14b) destinée à guider ladite section (10) suivant un chemin prédéterminé, dans lequel ledit élément (10) comprend des éléments de guidage destinés à coopérer avec lesdites rainures (14a, 14b).
